(19) Europäisches Patentamt
European Patent Office
Office européen des brevets

(11) **EP 4 468 091 A1**

(12) **EUROPÄISCHE PATENTANMELDUNG**

(43) Veröffentlichungstag:
    **27.11.2024   Patentblatt 2024/48**

(21) Anmeldenummer: **23174718.9**

(22) Anmeldetag: **23.05.2023**

(51) Internationale Patentklassifikation (IPC):
    **G05B 13/02** (2006.01)     **G05B 13/04** (2006.01)
    **B25J 9/16** (2006.01)

(52) Gemeinsame Patentklassifikation (CPC):
    **G05B 13/027; B25J 9/163; B25J 9/1661;**
    **G05B 13/042; G06N 3/092;** G05B 2219/40109

(84) Benannte Vertragsstaaten:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Benannte Erstreckungsstaaten:
    **BA**
    Benannte Validierungsstaaten:
    **KH MA MD TN**

(71) Anmelder: **Siemens Aktiengesellschaft
    80333 München (DE)**

(72) Erfinder:
    • **Swazinna, Phillip
      85375 Neufahrn (DE)**
    • **Hein, Daniel
      81549 München (DE)**
    • **Weber, Marc Christian
      80339 München (DE)**

(74) Vertreter: **Siemens Patent Attorneys
    Postfach 22 16 34
    80506 München (DE)**

(54) **VERFAHREN ZUM MANIPULIEREN VON KÖRPERLICHEN OBJEKTEN DURCH EINE MASCHINE SOWIE MASCHINENSTEUERUNG**

(57) Erfindungsgemäß werden der Maschine (M) eine Vielzahl von Objekten (O1, O2) real oder in dynamischer Simulation zugeführt. Weiterhin wird fortlaufend erfasst, welche der Objekte (O1, O2) einander aktuell benachbart sind. Darüber hinaus wird den Objekten (O1, O2) jeweils ein Steuerungsagent (P1, P2) zugeordnet, in den aktuelle Zustandsdaten (S1, S2) des jeweiligen Objekts (O1, O2) eingespeist werden. Ferner werden Neuronen eines neuronalen Netzes (GNN) fortlaufend gemäß den aktuell erfassten Nachbarschaften der Objekte (O1, O2) verknüpft. Durch das neuronale Netz (GNN) wird eine Übermittlung von Transferdatensätzen (TD) zwischen den Steuerungsagenten (P1, P2) gesteuert. Des Weiteren wird durch die Steuerungsagenten (P1, P2) anhand der eingespeisten Zustandsdaten (S1, S2) und der übermittelten Transferdatensätze (TD) eine Manipulation der Objekte (O1, O2) real oder in Simulation gesteuert, wobei eine diesbezügliche Performanz (RET) der Maschine (M) ermittelt wird. Damit wird das neuronale Netz (GNN) darauf trainiert, die Performanz (RET) zu optimieren. Schließlich wird die Maschine (M) mittels des trainierten neuronalen Netzes (GNN) sowie der Steuerungsagenten (P1, P2) gesteuert.

FIG 3

**Beschreibung**

Zum Steuern von komplexen Maschinen, wie z.B. Robotern, Logistiksystemen, Fertigungsanlagen oder Werkzeugmaschinen werden im zunehmenden Maße datengetriebene Verfahren des maschinellen Lernens eingesetzt. Hierbei werden insbesondere künstliche neuronale Netze mittels Verfahren des bestärkenden Lernens (Reinforcement Learning) darauf trainiert, für einen jeweiligen Zustand der Maschine eine zustandsspezifische Steueraktion zum Steuern der Maschine zu generieren, durch die eine Performanz der Maschine optimiert wird. Ein solcher zum Steuern einer Maschine optimierter Steuerungsagent wird häufig auch als Policy oder kurz als Agent bezeichnet.

In vielen Fällen sind mehrere Komponenten einer Maschine in abgestimmter Weise anzusteuern, um eine Vielzahl von Objekten, z.B. bei einer Paketsortieranlage zu manipulieren. Zu diesem Zweck kann jedem Objekt ein Steuerungsagent zugeordnet werden, der die Manipulation des betreffenden Objekts steuert. Die Steuerungsagenten sollen dann nach Möglichkeit derart zusammenwirken, dass eine globale, d.h. insbesondere objektübergreifende Performanz der Maschine, z.B. ein Objektdurchsatz, ein Ressourcenverbrauch oder ein Verschleiß optimiert wird.

Bekannte Verfahren zur Optimierung von kooperierenden Steuerungsagenten umfassen sogenannte Multi-Agent-Reinforcement-Learning-Verfahren (MARL). Bei einer ersten Variante werden die Steuerungsagenten durch eine zentrale Steuerung gesteuert. Dies führt jedoch häufig dazu, dass die Dimensionen der zu berücksichtigenden Zustandsräume oder Aktionsräume stark ansteigen. Gemäß einer zweiten Variante agieren die Steuerungsagenten dagegen weitgehend selbständig oder dezentral. Bei dieser Variante kann allerdings mangelnde Koordination verschiedener Steuerungsagenten zu globalen Performanzverlusten führen.

Weitere Verfahren zur Koordinierung von Steuerungsagenten sind der Publikation "Graph Neural Networks for Decentralized Multi-Robot Path Planning" von Qingbiao Li, Fernando Gama, Alejandro Ribeiro und Amanda Prorok auf https://arxiv.org/pdf/1912.06095.pdf (abgerufen am 25. April 2023) sowie der Publikation "Graph Policy Gradients for Large Scale Robot Control" von Arbaaz Khan, Ekaterina Tolstaya, Alejandro Ribeiro und Vijay Kumar auf https://arxiv.org/pdf/1907.03822.pdf (abgerufen am 25. April 2023) zu entnehmen.

Es ist Aufgabe der vorliegenden Erfindung, ein Verfahren zum Manipulieren von körperlichen Objekten durch eine Maschine sowie eine Maschinensteuerung zum Steuern der Maschine anzugeben, die besser koordinierte Manipulationen der Objekte und/oder ein effizienteres Steuern der Maschine erlauben.

Gelöst wird diese Aufgabe durch ein Verfahren mit den Merkmalen des Patentanspruchs 1, durch eine Maschinensteuerung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Zum Manipulieren von körperlichen Objekten durch eine Maschine werden der Maschine eine Vielzahl von Objekten real oder in dynamischer Simulation zugeführt. Das Manipulieren kann insbesondere ein Bearbeiten, Verarbeiten, Positionieren oder Lenken der Objekte umfassen. Die Objekte können beispielsweise Werkstücke, Bauteile, Stückgüter oder Prozessgüter sein. Weiterhin wird fortlaufend sensorisch oder simulativ erfasst, welche der Objekte gemäß einem vorgegebenen Nachbarschaftskriterium einander aktuell benachbart sind. Darüber hinaus wird den Objekten jeweils ein Steuerungsagent zum Steuern der Maschine zugeordnet, in den aktuelle Zustandsdaten des jeweiligen Objekts eingespeist werden. Ferner werden Neuronen eines neuronalen Netzes fortlaufend gemäß den aktuell erfassten Nachbarschaften der Objekte verknüpft. Durch das neuronale Netz wird eine Übermittlung von Transferdatensätzen zwischen den Steuerungsagenten gesteuert. Des Weiteren wird durch die Steuerungsagenten anhand der eingespeisten Zustandsdaten und der übermittelten Transferdatensätze eine Manipulation der Objekte real oder in Simulation gesteuert, wobei eine diesbezügliche Performanz der Maschine ermittelt wird. Damit wird das neuronale Netz darauf trainiert, die Performanz zu optimieren. Schließlich wird die Maschine mittels des trainierten neuronalen Netzes sowie der Steuerungsagenten gesteuert, um die körperlichen Objekte zu manipulieren.

Zum Ausführen des erfindungsgemäßen Verfahrens sind eine entsprechende Maschinensteuerung, ein Computerprogrammprodukt sowie ein computerlesbares, vorzugsweise nichtflüchtiges Speichermedium vorgesehen.

Das erfindungsgemäße Verfahren sowie die erfindungsgemäße Maschinensteuerung können beispielsweise mittels eines oder mehrerer Computer, Prozessoren, anwendungsspezifischer integrierter Schaltungen (ASIC), digitaler Signalprozessoren (DSP) und/der sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass eine Kommunikation zwischen den Steuerungsagenten durch das Training des neuronalen Netzes hinsichtlich einer globalen Performanz der Maschine optimiert werden kann. Auf diese Weise können die Steuerungsagenten effizienter koordiniert, die Objekte effizienter manipuliert und letztlich die Maschine effizienter betrieben werden. Eine zentrale Steuerung der Steuerungsagenten ist in vielen Fällen nicht erforderlich. Darüber hinaus können durch ein erfindungsgemäßes Verfahren auch Steuerungsagenten für eine wechselnde Anzahl von Objekten effizient koordiniert werden.

Ein weiterer Vorteil der Erfindung ist insbesondere darin zu sehen, dass durch die Erfassung von Objekt-Nachbarschaften und einer entsprechenden Verknüpfung von Neuronen des neuronalen Netzes eine Kommunikation zwischen den Steuerungsagenten und/oder eine Optimierung dieser Kommunikation auf Objekte beschränkt werden kann, deren gegenseitige Beeinflussung verhältnismäßig wahrscheinlich ist.

Vorteilhafte Ausführungsformen und Weiterbildungen der Erfindung sind in den abhängigen Ansprüchen angegeben.

Gemäß einer vorteilhaften Ausführungsform der Erfindung können die Steuerungsagenten gemeinsam mit dem neuronalen Netz darauf trainiert werden, die Performanz zu optimieren. Auf diese Weise können auch lernbasierte Steuerungsagenten eingesetzt werden, deren Steuerfähigkeiten im Zusammenwirken mit einer Kommunikationssteuerung des neuronalen Netzes optimiert werden.

Des Weiteren kann den Objekten jeweils eine Instanz eines gemeinsamen Steuerungsagenten zugeordnet werden. Der gemeinsame Steuerungsagent kann dann zusammen mit dem neuronalen Netz darauf trainiert werden, die Performanz zu optimieren. Damit kann in vielen Fällen ein Steueragententraining auf ein Training eines einzigen gemeinsamen Steuerungsagenten beschränkt werden. Auf diese Weise kann ein Trainingsaufwand in der Regel beträchtlich reduziert werden. Darüber hinaus kann bei einer wechselnden Anzahl von Objekten einem neu hinzukommenden Objekt einfach eine weitere Instanz des gemeinsamen, trainierten oder zu trainierenden Steuerungsagenten zugeordnet werden.

Nach einer weiteren vorteilhaften Ausführungsform der Erfindung können bei der Übermittlung der Transferdatensätze letztere durch das neuronale Netz propagiert werden.

Die Transferdatensätze können insbesondere entlang von Verknüpfungen des neuronalen Netzes übermittelt werden. Auf diese Weise kann durch die nachbarschaftsspezifischen Verknüpfungen des neuronalen Netzes direkt gesteuert werden, von welchem Steuerungsagenten Transferdatensätze an welchen Steuerungsagenten übermittelt werden. Sofern die Transferdatensätze jeweils mehrere Datenelemente aufweisen, kann das neuronale Netz auch datenelementspezifische Verknüpfungen umfassen, denen gegebenenfalls datenelementspezifische neuronale Gewichte zugeordnet sind. Hierdurch kann das neuronale Netz auch steuern, welche Datenelemente eines Transferdatensatzes übermittelt werden.

Nach einer besonders vorteilhaften Ausführungsform der Erfindung kann das neuronale Netz ein graphisches neuronales Netz sein. Letzteres wird häufig auch als "graph neural network" oder abgekürzt als GNN bezeichnet. Eigenschaften, Implementierungen und Training derartiger graphischer neuronaler Netze werden beispielsweise in der Online-Enzyklopädie Wikipedia unter https://en.wikipedia.org/wiki/Graph_neural_network (abgerufen am 26. April 2023) und in den darin zitierten Referenzen beschrieben. Der Inhalt der obigen Wikipedia-Seite sei hiermit in diese Anmeldung aufgenommen. Graphische neuronale Netze erlauben es, eine Datenübermittlung zwischen benachbarten Knoten eines Graphen auf das graphische neuronale Netz in natürlicher Weise abzubilden. Bei einem einzelnen Auswerteschritt eines graphischen neuronalen Netzes werden die Knoten des Graphen jeweils durch von Nachbarknoten empfangene Daten aktualisiert. Durch mehrmalige Auswertung können also Daten sukzessive über mehrere, jeweils benachbarte Knoten propagiert werden. Durch ein Training eines graphischen neuronalen Netzes kann eine Kommunikation zwischen Knoten eines Graphen nach vorgegebenen Kriterien optimiert werden. Zum Ausführen eines solchen Trainings stehen eine Vielzahl bekannter Optimierungsverfahren zur Verfügung.

Gemäß einer weiteren vorteilhaften Ausführungsform der Erfindung kann als Nachbarschaftskriterium ein Abstandmaß verwendet werden. Insbesondere kann ein jeweiliger aktueller Abstand zwischen den Objekten z.B. mittels einer Kamera, eines Näherungssensors, eines Feldstärkesensors oder simulativ ermittelt werden. In diesem Fall können Objekte dann als einander aktuell benachbart erfasst werden, wenn ihr aktueller Abstand geringer als ein vorgegebener Höchstabstand ist. Alternativ oder zusätzlich kann zu einem jeweiligen Objekt auch eine vorgegebene Anzahl derjenigen Objekte, die aktuell einen geringsten Abstand zum jeweiligen Objekt aufweisen, als aktuell benachbart erfasst werden.

In der Regel erfordert eine Manipulation von Objekten mit verhältnismäßig geringem Abstand mehr Koordinierungsaufwand als eine Manipulation von Objekten mit verhältnismäßig großem Abstand. Durch eine Beschränkung einer Kommunikation und/oder einer Optimierung dieser Kommunikation auf Objekte mit geringem Abstand, können in vielen Fällen Kommunikations- und Optimierungsressourcen eingespart werden, ohne eine Koordination der Steuerungsagenten signifikant zu verschlechtern.

Darüber hinaus können auch andere Nachbarschaftskriterien vorgesehen sein. So können Objekte im Allgemeinen dann als benachbart erfasst werden, wenn sich diese Objekte beeinflussen können, wenn eine solche Beeinflussung wahrscheinlich erscheint und/oder wenn diese Objekte indirekt zusammenwirken. Ein Beispiel für den letztgenannten Fall sind Objekte, die eine gemeinsame Ressource beanspruchen, wie beispielsweise Werkstücke, die vom selben Werkzeug zu bearbeiten sind und deshalb nicht unabhängig voneinander manipuliert werden können.

Gemäß einer weiteren vorteilhaften Ausführungsform der Erfindung kann aus den aktuell erfassten Nachbarschaften ein dynamischer Graph generiert werden, dessen Knoten jeweils einem Steuerungsagenten oder einem Objekt zugeordnet werden. Dabei können Knoten, die aktuell einander benachbarten Objekten zugeordnet sind, durch eine Kante verbunden werden. Durch eine Kante verbundene Knoten werden im Folgenden als Nachbarknoten bezeichnet. Entsprechend kann eine Kante gelöscht werden, wenn die den hierdurch verbundenen Knoten zugeordneten Objekte nicht mehr benachbart sind. Die Neuronen des neuronalen Netzes, insbesondere eines graphischen neuronalen Netzes können dann gemäß den Kanten des dynamischen Graphen verknüpft werden. Eine Verknüpfungsstruktur des dynamischen Graphen, d.h. die Verbindungen von dessen Knoten durch Kanten, kann insbesondere durch eine dynamische, d.h. zeitveränderliche Adjazenzmatrix dargestellt werden. Eine solche Adjazenzmatrix wird häufig auch als Adjacency matrix oder als Nachbarschaftsmatrix bezeichnet. Eine Adjazenzmatrix weist für jeden Knoten eine Zeile sowie eine Spalte auf. Sofern ein n-ter Knoten mit einem m-ten Knoten durch eine Kante verbunden ist, steht in der n-ten Zeile der m-ten Spalte der Adjazenzmatrix in der Regel ein nichtverschwindender Wert, z.B. eine Eins, andernfalls eine Null.

Darüber hinaus können in einem jeweiligen Knoten Zustandsdaten des zugeordneten Objekts, steuerungsrelevante Daten des zugeordneten Steuerungsagenten und/oder von Nachbarknoten des jeweiligen Knotens empfangene Transferdatensätze gespeichert werden. Hierdurch können die für die Manipulation der Objekte und/oder für die Steuerung der Maschine relevanten Daten in einheitlicher Weise und entsprechend ihren Übermittlungswegen im dynamischen Graphen gespeichert werden. Sofern die in einem jeweiligen Knoten gespeicherten Daten mehrere Datenelemente umfassen, kann für jedes Datenelement eine gesonderte, datenelementspezifische Kante zu einem Nachbarknoten des jeweiligen Knotens vorgesehen sein. Auf diese Weise kann ein Datenaustausch zwischen benachbarten Knoten durch das neuronale Netze datenelementspezifisch gesteuert werden.

Gemäß einer weiteren vorteilhaften Ausführungsform der Erfindung kann durch die Steuerungsagenten jeweils eine statistische Verteilung von Steuersignalwerten ausgegeben werden. Das neuronale Netz und/oder die Steuerungsagenten können dann anhand der ermittelten Performanz sowie anhand von Gradienten der statistischen Verteilungen trainiert werden. Auf diese Weise kann das neuronale Netz auch in solchen Fällen effizient trainiert werden, in denen die ermittelte Performanz nicht oder nur ungenau nach den zu optimierenden Lernparametern des neuronalen Netzes differenziert werden kann. In einem solchen Fall können anstelle von Gradienten der Performanz die Gradienten der statistischen Verteilungen nach den Lernparametern sowie die ermittelte Performanz für ein Rückpropagationsverfahren verwendet werden.

Vorzugsweise kann eine jeweilige statistische Verteilung durch einen Steuersignalwert und dessen Streubreite spezifiziert werden. In einem solchen Fall kann ein jeweiliger Gradient durch Ableiten einer Gauß-Verteilung mit dem jeweiligen Steuersignalwert als Mittelwert und der jeweiligen Streubreite als Standardabweichung ermittelt werden.

Alternativ oder zusätzlich kann zum Trainieren des neuronalen Netzes und/oder der Steuerungsagenten ein gradientenfreies Optimierungsverfahren verwendet werden. In diesem Fall ist es nicht erforderlich, Gradienten der Performanz zu ermitteln. Als gradientenfreies Optimierungsverfahren kann beispielsweise ein genetisches Optimierungsverfahren oder eine Partikelschwarmoptimierung verwendet werden.

Darüber hinaus kann ein Maschinenlernmodul darauf trainiert werden, anhand von Steuersignalen der Steuerungsagenten eine resultierende Performanz zu prädizieren. Zum Training des neuronalen Netzes und/oder der Steuerungsagenten kann dann das trainierte Maschinenlernmodul dazu verwendet werden, die Performanz zu prädizieren, wobei das Training anhand von Gradienten der prädizierten Performanz ausgeführt wird. Das Maschinenlernmodul kann dabei insbesondere ein sogenanntes Q-Learning-Verfahren ausführen und/oder ein sogenanntes Transitionsmodell umfassen.

Ein Ausführungsbeispiel der Erfindung wird nachfolgend anhand der Zeichnung näher erläutert. Dabei veranschaulichen jeweils in schematischer Darstellung:

Figur 1   eine Maschinensteuerung beim Steuern einer Maschine zum Manipulieren von zugeführten Objekten,

Figur 2   eine Paketsortieranlage als Beispiel einer solchen Maschine, und

Figur 3   ein Training der Maschinensteuerung.

Insofern in verschiedenen Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

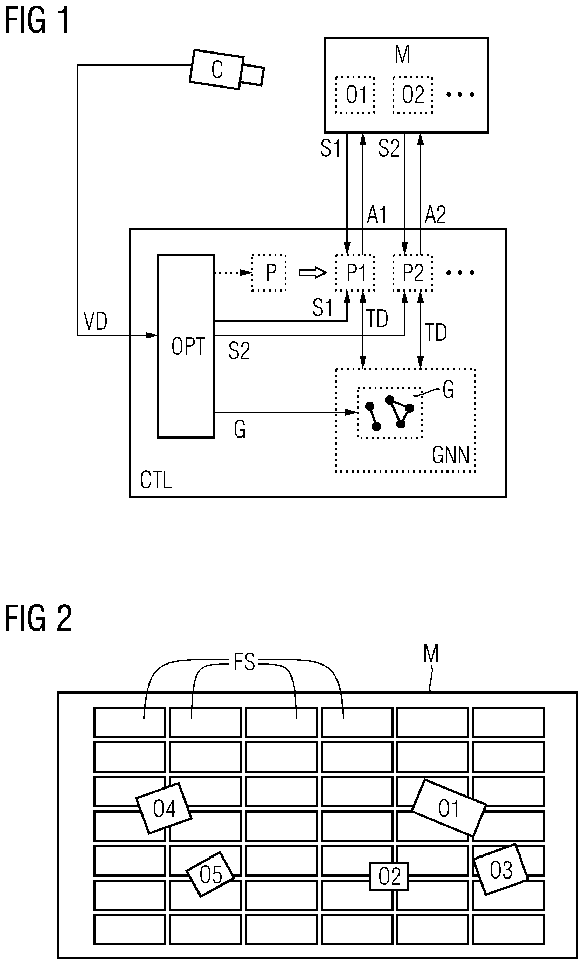

Figur 1 veranschaulicht eine Maschinensteuerung CTL beim Steuern einer Maschine M zum Manipulieren von der Maschine M zugeführten körperlichen Objekten O1, O2, .... Das Manipulieren kann insbesondere ein Bearbeiten, Verarbeiten, Positionieren oder Lenken dieser Objekte O1, O2, ... umfassen.

Die Maschinensteuerung CTL ist in Figur 1 extern zur Maschine M dargestellt und mit dieser gekoppelt. Alternativ kann die Maschinensteuerung CTL auch ganz oder teilweise in die Maschine M integriert sein. Die Maschinensteuerung CTL verfügt über einen oder mehrere Prozessoren zum Ausführen von Verfahrensschritten der Maschinensteuerung CTL sowie über einen oder mehrere mit dem Prozessor gekoppelte Speicher zum Speichern der von der Maschinensteuerung CTL zu verarbeitenden Daten.

Die Maschine M kann beispielsweise ein Roboter, ein Logistiksystem, ein Förderband, eine Fertigungsanlage, eine Werkzeugmaschine oder eine Paketsortieranlage sein. Die Maschine M weist insbesondere Komponenten zum gesteuerten und individuellen Manipulieren der zugeführten Objekte O1, O2, ... auf, beispielsweise individuell ansteuerbare Förderbandsegmente, Sortierelemente, Werkzeuge oder einen Greifarm. Die zu manipulierenden Objekte O1, O2, ... können Werkstücke, Bauteile, Stückgüter, Prozessgüter oder Pakete sein und insbesondere in zeitlich variabler Anzahl auftreten.

Für jedes aktuell der Maschine M zugeführte Objekt O1 bzw. O2, ... wird durch die Maschinenteuerung CTL ein objektspezifischer Steuerungsagent P1 bzw. P2, ... zum Steuern der Maschine M generiert und dem betreffenden Objekt O1, bzw. O2, ... zugeordnet. Ein jeweiliger Steuerungsagent P1 bzw. P2, ... steuert dabei insbesondere diejenigen Komponenten der Maschine M, durch die das zugeordnete Objekt O1 bzw. O2, ... aktuell manipulierbar ist. Jeder Steuerungsagent P1 bzw. P2, ... steuert so die Manipulation des ihm zugeordneten Objekts O1 bzw. O2, ....

Als Beispiel einer solchen Maschine M veranschaulicht Figur 2 eine Paketsortieranlage. Letztere weist ein Förderband auf, das individuell ansteuerbare Förderbandsegmente FS umfasst. Aus Gründen der Übersichtlichkeit sind in Figur 2 nur vier der Förderbandsegmente FS explizit durch ein Bezugszeichen gekennzeichnet. Durch individuelle Ansteuerung eines jeweiligen Förderbandsegments FS kann dessen Laufgeschwindigkeit individuell und unabhängig von anderen der Förderbandsegmente FS eingestellt werden.

Es sei angenommen, dass durch das Förderband aktuell mehrere zugeführte Pakete O1, ..., O5 als Objekte befördert werden. Die Pakete O1, ..., O5 können offensichtlich durch gezielte Ansteuerung derjenigen Förderbandsegmente FS, auf denen sie aktuell aufliegen, manipuliert werden. So können auf verschiedenen FS aufliegende Pakete O1, ..., O5 durch Variation der Geschwindigkeiten der betreffenden Förderbandsegmente FS einander angenähert oder voneinander entfernt werden, um z.B. einen gleichmäßigen Paketdurchsatz zu erzielen. Weiterhin kann ein auf verschiedenen Förderbandsegmenten FS aufliegendes Paket O1, ... bzw. O5 gedreht werden, indem die betreffenden Förderbandsegmente FS temporär mit unterschiedlicher Laufgeschwindigkeit betrieben werden.

Insofern sich Manipulationen aktuell benachbarter Objekte gegenseitig beeinflussen können, z.B. wenn zwei Pakete aktuell auf einem gemeinsamen Förderbandsegment FS aufliegen, sollten sich benachbarten Objekten zugeordnete Steuerungsagenten beim Steuern koordinieren. Zu diesem Zweck ist ein Datenaustausch zwischen den Steuerungsagenten P1, P2, ... vorgesehen. Erfindungsgemäß wird dieser Datenaustausch durch maschinelles Lernen optimiert. Ein entsprechendes Training der Maschinensteuerung CTL wird unten näher erläutert.

Wie Figur 1 weiter veranschaulicht, weist die Maschinensteuerung CTL zum Steuern einer Kommunikation zwischen verschiedenen Steuerungsagenten P1, P2, ... ein graphisches neuronales Netz GNN auf.

Darüber hinaus ist an die Maschinensteuerung CTL eine Videokamera C angekoppelt, die zum Detektieren von der Maschine M zugeführten Objekten O1, O2, ... sowie zum Feststellen, welche dieser Objekte einander benachbart sind, dient. Die Videokamera C ist auf die Maschine M bzw. auf die der Maschine M zugeführten Objekte O1, O2, ... ausgerichtet und zeichnet fortlaufend aktuelle Bilder dieser Objekte O1, O2, ... auf.

Die die von der Videokamera C aufgezeichneten Bilder werden in Form von Videodaten VD zur einer optischen Auswerteeinrichtung OPT der Maschinensteuerung CTL übermittelt. Die optische Auswerteeinrichtung OPT wertet die Videodaten fortlaufend mittels einer Bilderkennung aus, um der Maschine M aktuell zugeführte und von ihr manipulierbare Objekte, hier O1, O2, ... zu detektieren. Darüber hinaus ermittelt die optische Auswerteeinrichtung OPT für ein jeweils detektiertes Objekt O1 bzw. O2, ... fortlaufend dessen Position und gegebenenfalls dessen Größe, Orientierung und/oder Geschwindigkeit. Hieraus leitet die optische Auswerteeinrichtung OPT fortlaufend ab, welche der detektierten Objekte O1, O2, ... aktuell einander benachbart sind.

Als Kriterium für eine Nachbarschaft wird im vorliegenden Ausführungsbeispiel ein Abstandsmaß verwendet. Anhand der ermittelten Positionen und gegebenenfalls Größen und/oder Orientierungen der Objekte O1, O2, ... bestimmt die optische Auswerteeinrichtung OPT einen jeweiligen Abstand zwischen den Objekten O1, O2, ... und vergleicht diesen mit einem vorgegebenen Höchstabstand. Objekte, deren Abstand den Höchstabstand unterschreitet, werden als benachbart aufgefasst, Objekte mit größerem Abstand entsprechend als nicht benachbart.

Aus den ermittelten Nachbarschaften der Objekte O1, O2, ... generiert und/oder aktualisiert die optische Auswerteeinrichtung OPT fortlaufend einen dynamischen Graphen G. Letzterer ist zeitveränderlich und enthält für jedes aktuell manipulierbare Objekt O1 bzw. O2, ... einen diesem Objekt zugeordneten Knoten, wobei genau die Knoten benachbarter Objekte durch eine Kante verbunden sind. Dementsprechend wird eine Kante zwischen zwei früher benachbarten Knoten wieder gelöscht, sobald die zugeordneten Objekte durch die optische Auswerteeinrichtung OPT nicht mehr als benachbart erkannt werden. Der dynamische Graph G kodiert also gewissermaßen die aktuellen, sensorisch erfassten Nachbarschaften der Objekte O1, O2, ..., insbesondere auch bei einer wechselnden Anzahl von Objekten.

Anhand des dynamischen Graphen G werden durch die Maschinensteuerung CTL fortlaufend Neuronen des graphischen neuronalen Netzes GNN gemäß den im dynamischen Graphen G kodierten Nachbarschaften verknüpft oder deren Verknüpfungen aufgelöst. Das graphische neuronale Netz GNN bildet somit die aktuellen Knoten und Kanten des dynamischen Graphen G und damit die aktuellen Nachbarschaften der Objekte O1, O2, ... strukturell ab.

Weiterhin wird durch die optische Auswerteeinrichtung OPT für jedes manipulierbare Objekt O1, O2, ... fortlaufend dessen erfasste Position und gegebenenfalls dessen Größe, Orientierung oder Geschwindigkeit in Form eines objektspezifischen Zustandsdatensatzes S1 bzw. S2, ... ausgegeben. Dabei ist S1 der für das Objekt O1 spezifische Zustandsdatensatz, S2 der für das Objekt O1 spezifische Zustandsdatensatz usw.

Darüber hinaus werden auch durch die Maschine M fortlaufend aktuelle Zustandsdaten der Objekte O1, O2, ... und/oder Zustandsdaten von für die Objekte O1, O2, ... zuständigen Komponenten der Maschine M in objektspezifischer Weise erfasst. Die objektspezifischen Zustandsdaten werden ebenfalls in Form von objektspezifischen Zustandsdatensätzen von der Maschine M zur Maschinensteuerung CTL übermittelt. Diese objektspezifischen Zustandsdatensätze werden in Figur 1 aus Gründen der Übersichtlichkeit ebenfalls mit den Bezugszeichen S1, S2, ... bezeichnet. Auch hierbei ist S1 der für das Objekt O1 spezifische Zustandsdatensatz, S2 der für das Objekt O1 spezifische Zustandsdatensatz usw. Im Fall einer Paketsortieranlage können so insbesondere aktuelle Geschwindigkeiten von Förderbandsegmenten FS auf denen ein jeweiliges Objekt O1 bzw. O2, ... aktuell aufliegt, als jeweiliger objektspezifischer Zustandsdatensatz S1 bzw. S2, ... von der Maschine M zur Maschinensteuerung CTL übermittelt werden.

Im Allgemeinen können derartige Zustandsdatensätze Messdaten, Sensordaten, Umgebungsdaten oder andere im Betrieb der Maschine M anfallende oder den Betrieb beeinflussende Daten umfassen, insbesondere Daten über Aktorstellungen, auftretende Kräfte, Leistung, Druck, Temperatur, Ventilpositionen, Emissionen und/oder Ressourcenverbrauch der Maschine M oder einer ihrer Komponenten.

Im vorliegenden Ausführungsbeispiel werden die Zustandsdatensätze S1, S2, ... vorzugsweise jeweils durch einen numerischen Zustandsvektor quantifiziert.

Sobald die optische Auswerteeinrichtung OPT ein neues Objekt O1 bzw. O2, ... detektiert, wird die Maschinensteuerung CTL dazu veranlasst, einen neuen objektspezifischen Steuerungsagenten P1 bzw. P2, ... zu generieren und dem neu detektierten Objekt O1, bzw. O2, ... zuzuordnen. Der neue Steuerungsagent P1 bzw. P2, ... wird hierbei als neue Instanz eines gemeinsamen Steuerungsagenten P generiert.

Der gemeinsame Steuerungsagent P wurde in einem vorangegangenen Schritt durch ein Verfahren des bestärkenden Lernens gemeinsam mit dem graphischen neuronalen Netz GNN darauf trainiert, eine Performanz der Maschine M zu optimieren. Ein entsprechendes Training wird unten näher erläutert. Vorzugsweise ist der gemeinsame Steuerungsagent P durch ein künstliches neuronales Netz implementiert.

Eine objektspezifische Instanz des gemeinsamen Steuerungsagenten P kann beispielsweise erzeugt werden, indem dieser mitsamt seinen trainierten Lernparametern kopiert wird und der Kopie, d.h. der Instanz P1 bzw. P2, ..., ein objektspezifischer Speicher exklusiv zugeordnet wird. Alternativ oder zusätzlich können die Instanzen verschiedenen Aufrufen oder Auswertungen von Routinen entsprechen, mittels derer der gemeinsame Steuerungsagent P implementiert ist

Im vorliegenden Ausführungsbeispiel wird der für ein jeweiliges Objekt O1 bzw. O2, ... spezifische Speicher in dem diesem Objekt O1 bzw. O2, ... jeweils zugeordneten Knoten des graphischen neuronalen Netzes GNN angelegt. Diesem Knoten ist der betreffende Steuerungsagent P1 bzw. P2, ... dann zugeordnet. In diesem Knoten werden Zustandsdaten des betreffenden Objekts O1 bzw. O2, ... und andere für dessen Manipulation relevante Daten durch den zugeordneten Steuerungsagenten P1 bzw. P2, ... gespeichert, aktualisiert und/oder abgerufen. Auf diese Weise werden die Zustandsdaten und andere steuerungsrelevante Daten sowie deren Nachbarschaftsbeziehungen im graphischen neuronalen Netz GNN eingebettet. Eine solche Einbettung von Merkmalsdaten wird im Umfeld des maschinellen Lernens häufig auch als Embedding bezeichnet.

Zum Steuern der Maschine M werden die objektspezifischen Zustandsdatensätze S1, S2, ... fortlaufend jeweils dem für das betreffende Objekt O1 bzw. O2, ... zuständigen Steuerungsagenten P1 bzw. P2, ... zugeführt. Der jeweilige Steuerungsagent P1 bzw. P2, ... speichert die Zustandsdatensätze S1 bzw. S2, ... jeweils als objektspezifische Merkmalsdaten in dem ihm zugeordneten Knoten des graphischen neuronalen Netzes GNN.

Weiterhin werden zur Koordinierung der Steuerungsagenten P1, P2, ... fortlaufend Transferdatensätze TD zwischen den Steuerungsagenten P1, P2, ... übermittelt. Die Übermittlung wird durch das trainierte graphische neuronale Netz GNN in performanzoptimierter Weise gesteuert. Zu diesem Zweck werden die in den Knoten des graphischen neuronalen Netzes GNN gespeicherten Merkmalsdaten entlang von dessen Kanten durch das graphische neuronale Netz GNN propagiert. Welche Merkmalsdaten hierbei in Form eines Transferdatensatzes TD transportiert werden, wird durch neuronale Gewichte des graphischen neuronalen Netzes GNN bestimmt. Bei jedem Propagationsschritt werden die zu übermittelnden Daten um eine Kante bzw. zu einem benachbarten Knoten weitertransportiert. Durch den unten beschriebenen Trainingsprozess wurden die neuronalen Gewichte derart trainiert, dass möglichst diejenigen Datenelemente zu anderen Steuerungsagenten transportiert werden, die für deren effiziente Koordinierung am wichtigsten sind.

Durch die zu einem Knoten transportierten Transferdaten werden in diesem Knoten bereits gespeicherte Transferdatensätze TD fortlaufend aktualisiert. Die aktualisierten Transferdatensätze TD werden mit den objektspezifischen und anderen steuerungsagentspezifischen Merkmalsdaten des jeweiligen Knotens fortlaufend zu einem aktuellen Merkmalsvektor zusammengesetzt oder in anderer Weise aggregiert.

Der resultierende aktuelle Merkmalsvektor des jeweiligen Knotens wird dann in den jeweils zugeordneten Steuerungsagenten P1 bzw. P2, ... eingespeist, der daraus jeweils einen objektspezifischen Aktionsdatensatz A1 bzw. A2, ... ableitet. Ein jeweiliger Aktionsdatensatz A1 bzw. A2, ... spezifiziert hierbei eine jeweilige Steueraktion zum Steuern der Maschine M, insbesondere zum Manipulieren des zugeordneten Objekts O1 bzw. O2, .... Durch derartige Aktionsdatensätze können insbesondere Stellgrößen oder Stellgrößenänderungen der Maschine M spezifiziert werden, z.B. zum Einstellen individueller Laufgeschwindigkeiten der Förderbandsegmente FS.

Die von den Steuerungsagenten P1, P2, ... abgeleiteten Aktionsdatensätze A1, A2, ... werden zur Maschine M übermittelt, die die durch die Aktionsdatensätze A1, A2, ... spezifizierten Steueraktionen ausführt. Hierdurch werden die aktuell der Maschine M zugänglichen Objekte O1, O2, ... in einer performanzoptimierten Weise manipuliert.

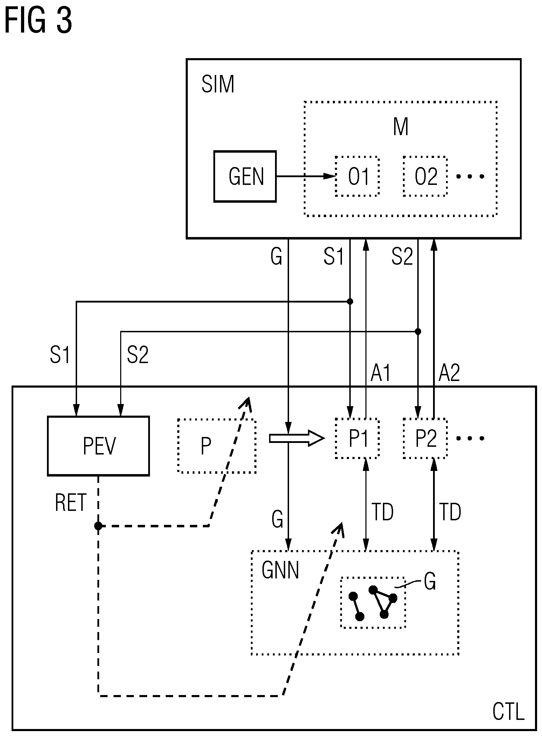

Figur 3 veranschaulicht ein datengetriebenes Training der Maschinensteuerung CTL durch gemeinsames Training des graphischen neuronalen Netzes GNN und des gemeinsamen Steuerungsagenten P.

Unter einem Training sei allgemein eine Optimierung einer Abbildung von Eingabedaten eines Maschinenlernmoduls, hier des graphischen neuronalen Netzes GNN und des gemeinsamen Steuerungsagenten P, auf dessen Ausgabedaten verstanden. Diese Abbildung wird nach vorgegebenen Kriterien während einer Trainingsphase optimiert. Als Kriterien können insbesondere bei Steuermodellen ein Erfolg von Steueraktionen herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Trainieren lassen sich so insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, K-nächste-Nachbarn-Klassifikatoren, physikalische Modelle oder Entscheidungsbäume.

Wie oben schon erwähnt, sind das graphische neuronale Netz GNN sowie der gemeinsame Steuerungsagent P im vorliegenden Ausführungsbeispiel jeweils als künstliches neuronales Netz implementiert. Beide Netze GNN und P werden durch ein Verfahren des bestärkenden Lernens gemeinsam trainiert.

Zur Bereitstellung von Trainingsdaten wird ein Simulator SIM verwendet, der die Maschine M sowie deren Manipulation von virtuellen Objekten O1, O2, ... dynamisch, d.h. im Zeitverlauf simuliert. Aus Übersichtlichkeitsgründen werden in Figur 3 für die virtuellen Objekte die gleichen Bezugszeichen O1, O2, ... verwendet wie für die realen Objekte in Figur 1. Für derartige Simulationen steht eine Vielzahl effizienter Simulatoren zur Verfügung. Insbesondere kann ein sogenannter digitaler Zwilling der Maschine M als Simulator verwendet werden. Alternativ oder zusätzlich können die Trainingsdaten auch im laufenden Betrieb der Maschine M oder einer dazu ähnlichen Maschine gemessen oder anderweitig erfasst werden.

Der Simulator SIM umfasst einen Objektgenerator GEN zum fortlaufenden Generieren einer Vielzahl von virtuellen Objekten O1, O2, .... Letztere werden fortlaufend der Maschine M zumindest teilweise zufallsbasiert und/oder gemäß einer vorgegebenen, möglichst realistischen Verteilung in Simulation zugeführt.

Infolgedessen ermittelt oder aktualisiert der Simulator SIM fortlaufend einen dynamischen Graphen G, der wie oben beschrieben, die aktuellen virtuellen Objekte O1, O2, ... sowie deren aktuelle Nachbarschaften spezifiziert. Der dynamische Graph G wird vom Simulator SIM zur Maschinensteuerung CTL übermittelt.

Darüber hinaus generiert der Simulator SIM fortlaufend objektspezifische Zustandsdatensätze S1, S2, ..., die jeweils einen aktuellen Zustand des jeweils generierten virtuellen Objekts O1 bzw. O2, ... sowie andere für dessen Manipulation relevante Merkmalsdaten spezifizieren. Die aktuellen Zustandsdatensätze S1, S2, ... werden vom Simulator SIM zur Maschinensteuerung CTL übermittelt.

Die Maschinensteuerung CTL prüft den dynamischen Graphen G fortlaufend dahingehend, ob darin ein neues virtuelles Objekt spezifiziert wird. Sobald auf diese Weise ein neues virtuelles Objekt O1 bzw. O2, ... detektiert wird, generiert die Maschinensteuerung CTL einen neuen objektspezifischen Steuerungsagenten P1 bzw. P2, ... und ordnet diesen dem betreffenden neuen virtuellen Objekt O1 bzw. O2, ... zu. Der neue Steuerungsagent P1 bzw. P2, ... wird hierbei, wie oben beschrieben, als neue Instanz des gemeinsamen Steuerungsagenten P generiert.

Weiterhin werden Neuronen des graphischen neuronalen Netzes GNN durch die Maschinensteuerung CTL fortlaufend gemäß den im dynamischen Graphen G kodierten Nachbarschaften wie oben beschrieben verknüpft bzw. deren Verknüpfungen aufgelöst.

Die Zustandsdatensätze S1, S2, ... werden fortlaufend jeweils dem für das betreffende virtuelle Objekt O1 bzw. O2, ... zuständigen Steuerungsagenten P1 bzw. P2, ... sowie einem Performanzbewerter PEV der Maschinensteuerung CTL zugeführt. Darüber hinaus werden zwischen den Steuerungsagenten P1, P2, ... fortlaufend Transferdatensätze TD übertragen. Die Übertragung wird durch das graphische neuronale Netz GNN wie oben beschrieben gesteuert.

Die Steuerungsagenten P1, P2, ... leiten jeweils anhand eines zugeführten Zustandsdatensatzes S1 bzw. S2, ... und anhand von empfangenen Transferdatensätzen TD einen objektspezifischen Aktionsdatensatz A1 bzw. A2, ... wie oben beschrieben ab. Die von den Steuerungsagenten P1, P2, ... abgeleiteten Aktionsdatensätze A1, A2, ... werden zum Simulator SIM übermittelt, der infolgedessen die durch die Aktionsdatensätze A1, A2, ... spezifizierten Steueraktionen sowie deren Auswirkungen simuliert. Als Ergebnis der Simulation werden durch den Simulator SIM insbesondere aktuelle Zustandsdatensätze S1, S2, ... generiert, die die durch die Steueraktionen induzierten neuen Zustände der virtuellen Objekte O1, O2, ... und/oder der Maschine M spezifizieren.

Die aktuellen Zustandsdatensätze S1, S2, ... werden unter anderem in den Performanzbewerter PEV der Maschinensteuerung CTL eingespeist. Der Performanzbewerter PEV dient dem Zweck, anhand von Zustandsdaten der Maschine M und/oder von durch die Maschine M manipulierten Objekten einen Performanzwert RET zu ermitteln, durch den eine Performanz, insbesondere eine objektübergreifende Performanz der Maschine M quantifiziert wird. Eine Bewertungsfunktion, die einen solchen Performanzwert zurückgibt, wird im Kontext des maschinellen Lernens häufig auch als Belohnungsfunktion, Zielfunktion, Kostenfunktion oder Verlustfunktion bezeichnet.

Die zu bewertende Performanz kann insbesondere einen Objektdurchsatz, einen Ressourcenverbrauch, einen Verschleiß, eine Leistung, einen Ertrag, eine Geschwindigkeit, eine Laufzeit, eine Präzision, eine Fehlerrate, einen Wirkungsgrad, eine Effizienz, eine Ausbeute, eine Produktqualität, einen Schadstoffausstoß, eine Stabilität, eine einzuhaltende Nebenbedingung oder andere Zielgrößen der Maschine M oder einer ihrer Komponenten betreffen. Insbesondere kann ein Maß, das angibt, wie effizient die Objekte O1, O2, ... durch die Maschine M manipuliert werden, als Maß für die Performanz verwendet werden.

Vorzugsweise wird eine über mehrere Zeitschritte kumulierte Performanz ermittelt. Auf diese Weise können die induzierten Steueraktionen auch hinsichtlich längerfristiger Performanzziele bewertet werden. Eine solche kumulierte Performanz wird im Zusammenhang des bestärkenden Lernens häufig auch als Return bezeichnet. Zur Berechnung des Returns können für zukünftige Zeitschritte ermittelte Einzel-Performanzwerte diskontiert, d.h. mit für jeden Zeitschritt kleiner werdenden Gewichten versehen werden. Für das vorliegende Ausführungsbeispiel sein angenommen, dass der vom Performanzbewerter PEV ermittelte Performanzwert RET ein solcher kumulierter Performanzwert ist.

Zum Ermitteln von Performanzwerten RET kann der Performanzbewerter PEV beispielsweise ein zusätzliches Maschinenlernmodul (nicht dargestellt) aufweisen, das darauf trainiert ist, anhand Zustandsdatensätzen und/oder Aktionsdatensätzen eine resultierende Performanz zu prädizieren. Zum Training eines solchen prädiktiven Maschinenlernmoduls können Standardverfahren des überwachten Lernens verwendet werden.

Alternativ oder zusätzlich kann der Performanzbewerter PEV auch mittels eines Q-Learning-Verfahrens darauf trainiert sein, eine über einen zukünftigen Zeitraum kumulierte Performanz zu ermitteln. Zur Durchführung von Q-Learning-Verfahren steht eine Vielzahl von effizienten numerischen Optimierungsverfahren zur Verfügung.

Anhand der vom Performanzbewerter PEV ermittelten Performanzwerte RET werden der gemeinsame Steuerungsagent P sowie das graphische neuronale Netz GNN gemeinsam mittels eines Verfahrens des bestärkenden Lernens darauf trainiert, die Performanz der Maschine M zu optimieren. Zu diesem Zweck werden - wie in Figur 3 durch strichlierte Pfeile angedeutet - die Performanzwerte RET sowohl zum gemeinsamen Steuerungsagenten P als auch zum graphischen neuronalen Netz GNN zurückgeführt. Abhängig davon werden zu optimierende Modellparameter des gemeinsamen Steuerungsagenten P sowie des graphischen neuronalen Netzes GNN im Rahmen eines Optimierungsverfahrens so eingestellt, dass die Performanzwerte RET im Laufe des Optimierungsverfahrens zumindest im Mittel optimiert werden. Auf diese Weise wird insbesondere der gemeinsame Steuerungsagent P darauf trainiert, die Manipulation von Objekten O1, O2, ... in dezentraler Weise durch objektspezifische Instanzen P1, P2, ... zu steuern. Zum Durchführen eines derartigen Trainings kann auf eine Vielzahl von effizienten Standardverfahren zurückgegriffen werden.

Ein konkretes Optimierungsverfahren kann beispielsweise folgendermaßen implementiert werden:
Sei $V_n(t)$, n=1,..., N(t), eine mit der Zeit t veränderliche Menge von Knoten des dynamischen Graphen G, die eine aktuelle Menge von Steuerungsagenten P1, P2, ..., PN sowie Objekten O1, O2, ..., ON repräsentiert. N(t) gibt dabei eine aktuelle Anzahl der Knoten an. Sei weiter E(t) eine dynamische quadratische Adjazenzmatrix der Dimension N(t), die eine Kante, d.h. ein Matrixelement $E_{nm}(t) <> 0$ enthält, wenn ein aktueller Abstand zwischen dem n-ten Objekt und dem m-ten Objekt einen vorgegebenen Höchstabstand unterschreitet. Das n-te und das m-te Objekt werden in diesem Fall als benachbart aufgefasst.

Das graphische neuronale Netz GNN wirkt auf die Merkmalsdaten der Knoten $V_n$, wobei die aktuellen Verknüpfungen der Knoten $V_n$ durch die aktuelle Adjazenzmatrix E(t), d.h. durch die aktuell erfassten Nachbarschaften vorgegeben sind. Durch das Training des graphischen neuronalen Netzes GNN werden dann Matrizen $A_k$, k=1,...,K, optimiert, die jeweils einen Merkmalsvektor eines jeweiligen Knotens auf zu übertragende Datenelemente eines Transferdatensatzes TD abbilden. Dabei können mehrere, hier K, Propagationsschritte vorgesehen sein. Derartige Propagationsschritte werden häufig auch als Hops bezeichnet. Die durch den Index k indizierten Matrizen $A_k$ sind dann schrittspezifisch und werden schrittspezifisch optimiert.

Durch die Optimierung einer jeweiligen Matrix $A_k$ wird erreicht, dass im k-ten Propagationsschritt nach Möglichkeit diejenigen Datenelemente übertragen werden, die für die effiziente Koordinierung der Steuerungsagenten P1, ..., PN am wichtigsten sind. Die Matrizen $A_k$ haben Z Zeilen und S Spalten, wobei S der Dimension der Merkmalsvektoren entspricht und Z einer Dimension eines jeweiligen Transferdatenvektors TD.

Die Merkmalsvektoren der verschiedenen Knoten werden zeilenweise zu einer Merkmalsmatrix X zusammengefasst, die dementsprechend N Zeilen und S Spalten aufweist. Aus der Merkmalsmatrix X wird eine neue Merkmalsmatrix Y gebildet gemäß $Y = f\left(\sum_k E_k * X * A_k^T\right)$, wobei $A_k^T$ die zu $A_k$ transponierte Matrix ist und $E_k = E(t) * E_{k-1}$ mit $E_0 = E(t)$, Hop-übergreifende Nachbarschaften beschreibt. f ist eine nichtlineare Funktion, z.B. eine Sigmoidfunktion oder eine tanh-Funktion, die matrixelementweise wirkt. Die neue Merkmalsmatrix Y hat entsprechend N Zeilen und Z Spalten.

Die vorstehende Berechnung kann mehrfach wiederholt werden, wobei jeweils die neue Merkmalsmatrix Y die jeweils vorangegangene Merkmalsmatrix X ersetzt. Aufgrund der ggf. geänderten Spaltenzahl der neuen Merkmalsmatrix Y ändern sich im nächsten Iterationsschritt auch die Spaltenzahl und ggf. die Zeilenzahl der Matrizen $A_k$. Eine solcher Iterationsschritt wird im Zusammenhang mit graphischen neuronalen Netzen häufig auch als Layer bezeichnet.

Durch das Training des graphischen neuronalen Netzes GNN und des gemeinsamen Steuerungsagenten P werden die Matrizen $A_k$ aller Layer zusammen mit den Lernparametern des gemeinsamen Steuerungsagenten P so eingestellt, dass die Performanz wie oben beschrieben optimiert wird. Auf diese Weise kann einerseits die Übertragung der Transferdatensätze TD durch das graphische neuronale Netz GNN und andererseits eine dezentrale Steuereffizienz der Steuerungsagenten P1, P2, ... hinsichtlich einer globalen Performanz der Maschine M optimiert werden.

**Patentansprüche**

1. Computerimplementiertes Verfahren zum Manipulieren von körperlichen Objekten (O1, O2) durch eine Maschine (M), wobei

a) der Maschine (M) eine Vielzahl von Objekten (O1, O2) real oder in dynamischer Simulation zugeführt wird,

b) fortlaufend sensorisch oder simulativ erfasst wird, welche der Objekte (O1, O2) gemäß einem vorgegebenen Nachbarschaftskriterium einander aktuell benachbart sind,

c) den Objekten (O1, O2) jeweils ein Steuerungsagent (P1, P2) zum Steuern der Maschine (M) zugeordnet wird, in den aktuelle Zustandsdaten (S1, S2) des jeweiligen Objekts (O1, O2) eingespeist werden,

d) Neuronen eines neuronalen Netzes (GNN) fortlaufend gemäß den aktuell erfassten Nachbarschaften der Objekte (O1, O2) verknüpft werden,

e) eine Übermittlung von Transferdatensätzen (TD) zwischen den Steuerungsagenten (P1, P2) durch das neuronale Netz (GNN) gesteuert wird,

f) durch die Steuerungsagenten (P1, P2) anhand der eingespeisten Zustandsdaten (S1, S2) und der übermittelten Transferdatensätze (TD) eine Manipulation der Objekte (O1, O2) real oder in Simulation gesteuert wird, wobei eine diesbezügliche Performanz (RET) der Maschine (M) ermittelt wird,

g) das neuronale Netz (GNN) darauf trainiert wird, die Performanz (RET) zu optimieren, und

h) die Maschine (M) mittels des trainierten neuronalen Netzes (GNN) sowie der Steuerungsagenten (P1, P2) gesteuert wird, um die körperlichen Objekte (O1, O2) zu manipulieren.

2. Verfahren nach Anspruch 1, **dadurch gekennzeichnet,** **dass** die Steuerungsagenten (P1, P2) gemeinsam mit dem neuronalen Netz (GNN) darauf trainiert werden, die Performanz (RET) zu optimieren.

3. Verfahren nach einem der vorhergehenden Ansprüche, **dadurch gekennzeichnet,** **dass** den Objekten (O1, O2) jeweils eine Instanz (P1, P2) eines gemeinsamen Steuerungsagenten (P) zugeordnet wird, und dass der gemeinsame Steuerungsagent (P) zusammen mit dem neuronalen Netz (GNN) darauf trainiert wird, die Performanz (RET) zu optimieren.

4. Verfahren nach einem der vorhergehenden Ansprüche, **dadurch gekennzeichnet,** **dass** bei der Übermittlung der Transferdatensätze (TD) die Transferdatensätze (TD) durch das neuronale Netz (GNN) propagiert werden.

5. Verfahren nach einem der vorhergehenden Ansprüche, **dadurch gekennzeichnet,** **dass** die Transferdatensätze (TD) entlang von Verknüpfungen des neuronalen Netzes (GNN) übermittelt werden

6. Verfahren nach einem der vorhergehenden Ansprüche, **dadurch gekennzeichnet,**
**dass** das neuronale Netz (GNN) ein graphisches neuronales Netz ist.

7. Verfahren nach einem der vorhergehenden Ansprüche, **dadurch gekennzeichnet,**
**dass** als Nachbarschaftskriterium ein Abstandmaß verwendet wird.

8. Verfahren nach einem der vorhergehenden Ansprüche, **dadurch gekennzeichnet,**

**dass** aus den aktuell erfassten Nachbarschaften ein dynamischer Graph (G) generiert wird, dessen Knoten jeweils einem Steuerungsagenten (P1, P2) oder einem Objekt (O1, O2) zugeordnet werden, wobei
aktuell einander benachbarten Objekten (O1, O2) zugeordnete Knoten durch eine Kante verbunden werden, und wobei eine Kante gelöscht wird, wenn die den hierdurch verbundenen Knoten zugeordneten Objekte (O1, O2) nicht mehr benachbart sind, und dass die Neuronen des neuronalen Netzes (GNN) gemäß den Kanten des dynamischen Graphen (G) verknüpft werden.

9. Verfahren nach Anspruch 8, **dadurch gekennzeichnet,**
**dass** in einem jeweiligen Knoten Zustandsdaten (S1, S2) des zugeordneten Objekts (O1, O2), steuerungsrelevante Daten des zugeordneten Steuerungsagenten (P1, P2) und/oder von Nachbarknoten des jeweiligen Knotens empfangene Transferdatensätze (TD) gespeichert werden.

10. Verfahren nach einem der vorhergehenden Ansprüche,
**dadurch gekennzeichnet,**

**dass** durch die Steuerungsagenten (P1, P2) jeweils eine statistische Verteilung von Steuersignalwerten ausgegeben wird, und
**dass** das neuronale Netz und/oder die Steuerungsagenten (P1, P2) anhand der ermittelten Performanz (RET) sowie anhand von Gradienten der statistischen Verteilungen trainiert werden.

11. Verfahren nach einem der vorhergehenden Ansprüche,
**dadurch gekennzeichnet,**
**dass** zum Trainieren des neuronalen Netzes (GNN) und/oder der Steuerungsagenten (P1, P2) ein gradientenfreies Optimierungsverfahren verwendet wird.

12. Verfahren nach einem der vorhergehenden Ansprüche,
**dadurch gekennzeichnet,**

**dass** ein Maschinenlernmodul darauf trainiert wird, anhand von Steuersignalen (A1, A2) der Steuerungsagenten (P1, P2) eine resultierende Performanz zu prädizieren, und
**dass** zum Training des neuronalen Netzes (GNN) und/oder der Steuerungsagenten (P1, P2) das trainierte Maschinenlernmodul dazu verwendet wird, die Performanz (RET) zu prädizieren, wobei das Training anhand von Gradienten der prädizierten Performanz ausgeführt wird.

13. Maschinensteuerung (CTL) zum Steuern einer Maschine (M), mit Mitteln zum Ausführen der Schritte eines Verfahrens nach einem der vorhergehenden Ansprüche.

14. Computerprogrammprodukt, umfassend Befehle, die bei der Ausführung des Programms durch einen Computer diesen veranlassen ein Verfahren nach einem der Ansprüche 1 bis 12 auszuführen.

15. Computerlesbares Speichermedium mit einem Computerprogrammprodukt nach Anspruch 14.

FIG 1

FIG 2

# FIG 3

Europäisches
Patentamt

European
Patent Office

Office européen
des brevets

**EUROPÄISCHER RECHERCHENBERICHT**

Nummer der Anmeldung

EP 23 17 4718

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ARBAAZ KHAN ET AL: "Graph Policy Gradients for Large Scale Robot Control", ARXIV.ORG, CORNELL UNIVERSITY LIBRARY, 201 OLIN LIBRARY CORNELL UNIVERSITY ITHACA, NY 14853, 8. Juli 2019 (2019-07-08), XP081542685, | 1-7, 10-15 | INV. G05B13/02 G05B13/04 B25J9/16 |
| A | * das ganze Dokument * | 8,9 | |
| | ----- | | |
| A | EP 3 940 596 A1 (SIEMENS AG [DE]) 19. Januar 2022 (2022-01-19) * Zusammenfassung * * Absatz [0006] – Absatz [0016] * * Absatz [0028] – Absatz [0033] * * Abbildungen 1,2 * * Anspruch 1 * | 1-15 | |
| | ----- | | |
| A | WO 2023/072528 A1 (SIEMENS AG [DE]) 4. Mai 2023 (2023-05-04) * das ganze Dokument * | 1-15 | |
| | ----- | | |
| A | RYAN KORTVELESY ET AL: "ModGNN: Expert Policy Approximation in Multi-Agent Systems with a Modular Graph Neural Network Architecture", ARXIV.ORG, [Online] 31. März 2021 (2021-03-31), XP081916483, Arxiv.org DOI: https://doi.org/10.48550/arXiv.2103.13446 Gefunden im Internet: URL:https://arxiv.org/abs/2103.13446> [gefunden am 2023-11-03] * das ganze Dokument * | 1-15 | **RECHERCHIERTE SACHGEBIETE (IPC)** G05B B25J G06N |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 6. November 2023 | Abbing, Ralf |

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 23 17 4718**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | ZHOU LIFENG ET AL: "Graph Neural Networks for Decentralized Multi-Robot Target Tracking", 2022 IEEE INTERNATIONAL SYMPOSIUM ON SAFETY, SECURITY, AND RESCUE ROBOTICS (SSRR), IEEE, 8. November 2022 (2022-11-08), Seiten 195-202, XP034280160, DOI: 10.1109/SSRR56537.2022.10018712 [gefunden am 2023-01-24] * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 6. November 2023 | Abbing, Ralf |

EPO FORM 1503 03.82 (P04C03)

**Seite 2 von 2**

**ANHANG ZUM EUROPÄISCHEN RECHERCHENBERICHT
ÜBER DIE EUROPÄISCHE PATENTANMELDUNG NR.**

EP 23 17 4718

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-11-2023

| Im Recherchenbericht angeführtes Patentdokument | Datum der Veröffentlichung | Mitglied(er) der Patentfamilie | | Datum der Veröffentlichung |
|---|---|---|---|---|
| EP 3940596 A1 | 19-01-2022 | CN | 115867920 A | 28-03-2023 |
| | | EP | 3940596 A1 | 19-01-2022 |
| | | US | 2023266721 A1 | 24-08-2023 |
| | | WO | 2022013125 A1 | 20-01-2022 |
| WO 2023072528 A1 | 04-05-2023 | EP | 4174720 A1 | 03-05-2023 |
| | | WO | 2023072528 A1 | 04-05-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **QINGBIAO LI** ; **FERNANDO GAMA** ; **ALEJANDRO RIBEIRO** ; **AMANDA PROROK**. *Graph Neural Networks for Decentralized Multi-Robot Path Planning*, 25 April 2023, https://arxiv.org/pdf/1912.06095.pdf

- **ARBAAZ KHAN** ; **EKATERINA TOLSTAYA** ; **ALEJANDRO RIBEIRO** ; **VIJAY KUMAR**. *Graph Policy Gradients for Large Scale Robot Control*, 25 April 2023, https://arxiv.org/pdf/1907.03822.pdf
- *Online-Enzyklopädie Wikipedia*, 26 April 2023, https://en.wikipedia.org/wiki/Graph_neural_network